# EUROPÄISCHE PATENTANMELDUNG

(11) **EP 0 903 277 A2**
(43) Veröffentlichungstag der Anmeldung: **24.03.1999**
(21) Anmeldenummer: 98117391.7
(22) Anmeldetag: 14.09.1998
(51) Int. Cl.: B62B 3/06

(54) **Hubwagen**

(30) Priorität: 22.09.1997 DE 19741764
(71) Anmelder: ICE Cargo Equipment AG, 6330 Cham (CH)
(72) Erfinder: Fischer, Horst, 46147 Oberhausen (DE)
(74) Vertreter: Preissner, Nicolaus, Dipl.-Ing.

(57) **Zusammenfassung**

Die Erfindung betrifft einen Hubwagen, insbesondere für die Verwendung im Luftfrachtbereich, mit einem Antriebsteil (2), das mindestens ein Antriebsrad aufweist, und einem an dem Antriebsteil (2) geführten Lastteil (3), das mindestens eine Laufrolle (15) aufweist und mittels einer Hubeinrichtung bezüglich des Antriebsteils höhenverstellbar ist. Der Hubwagen ist mit zwei nacheinander betätigbaren Hubmitteln für jeweils eine Hubstufe (9, 10) versehen.

## Beschreibung

Die vorliegende Erfindung betrifft einen Hubwagen, insbesondere für die Verwendung im Luftfrachtbereich, mit einem Antriebsteil, das mindestens ein Antriebsrad aufweist, und einem an dem Antriebsteil geführten Lastteil, das mindestens eine Laufrolle aufweist und mittels einer Hubeinrichtung bezüglich des Antriebsteils höhenverstellbar ist.

Derartige Hubwagen sind bereits in unterschiedlichen Bauformen bekannt geworden. So zeigen beispielsweise die DE-PS 25 24 163 sowie die DE-OS 38 08 007, bereits das Anheben einer Gabel über von einer Druckstange ausgeschwenkte Lastrollen. Nachteilig bei dieser Bauart ist allerdings, daß der erreichbare Hub relativ gering ist.

Weitere Bauarten verwenden beispielsweise ein Scherenprinzip, bei dem ein Hub bis zu etwa 800 mm erreicht werden kann.

Der Einsatz eines Hubwagens im Luftfrachtbereich erfordert das Handling relativ großer Lasten, die bis zu etwa 7 t reichen. Diese Lasten müssen auf eine bestimmte, vorgegebene Systemhöhe angehoben werden (beispielsweise 508 mm). Die Geräte müssen dabei sehr wendig sein, da auf Flughäfen wegen der sehr hohen Quadratmeterpreise nur wenig Platz zur Verfügung steht.

Die bekannten Konstruktionen können entweder nicht die relativ hohen Lasten bewältigen oder sind derart sperrig, daß sie für den Einsatz unter beengten Platzverhältnissen nicht in Frage kommen. Darüber hinaus muß die vorgegebene Höhe relativ genau eingehalten werden, was bei den bisher bekannten Konstruktionen ebenfalls mit Schwierigkeiten verbunden ist.

Aufgabe der vorliegenden Erfindung ist es daher, einen Hubwagen der eingangs genannten Art dahingehend weiterzubilden, daß er auf relativ kleinem Platz rasch und zuverlässig relativ große Lasten mit hoher Genauigkeit auf bestimmte Höhen anheben kann.

Erfindungsgemäß wird diese Aufgabe bei einem gattungsgemäßen Hubwagen dadurch gelöst, daß zur Höhenverstellung des Lastteils zwei nacheinander betätigbare Hubmittel für jeweils eine Hubstufe vorgesehen sind.

Das erste Hubmittel wird hierbei dafür genutzt, die zu transportierende Last zunächst vom Boden abzuheben und um eine relativ geringe Höhe anzuheben. In diesem abgesenkten Zustand kann der Hubwagen noch sehr gut manöverieren und ist kippstabil, da der Schwerpunkt noch tief liegt.

Erst dann, wenn die Last tatsächlich von dem Hubwagen aus übergeben werden soll, wird diese über das zweite Hubmittel auf die vorgesehene Höhe gebracht.

Das erste Hubmittel ist hierbei in einer vorteilhaften Ausführung der Erfindung als Druckstangenmechanik ausgebildet. Hierbei wirkt eine Druckstange auf einen Radarmhebel, über den mindestens eine erste Laufrolle bezüglich des Lastteils schwenkbar ist. Mit diesen Laufrollen stützt sich dann das Lastteil gegenüber dem Boden ab.

Das zweite Hubmittel weist ein Zugmittel auf, das bevorzugt als Doppelkette ausgebildet ist. Mit diesem Zugmittel kann mindestens eine zweite Laufrolle bezüglich der genannten ersten Laufrolle des ersten Hubmittels verschwenkt werden. Diese zweite Laufrolle ist an dem freien ersten Ende eines Schwenkhebels angeordnet, der seinerseits schwenkbar an dem Radarmhebel des ersten Hubmittels angebracht ist. Das Zugmittel wirkt entsprechend auf das Ende dieses Schwenkhebel, das den Rollen gegenüberliegt.

Für ein Anheben der Last wird nun zunächst diese unterfahren. Anschließend erfolgt eine Betätigung des ersten Hubmittels, gefolgt von einem Verbringen der nun angehobenen Last mit dem Hubwagen an die gewünschte Stelle. Dort wird das zweite Hubmittel betätigt, so daß die Last auf die Übergabehöhe angehoben wird.

Um Gewicht und Kosten zu sparen wird es bevorzugt, beide Hubmittel über eine gemeinsame Hubeinrichtung zu beaufschlagen. Bevorzugt weist diese Hubeinrichtung mindestens einen Hubzylinder auf, der sich mit einem Ende am Rahmen und mit dem anderen Ende am Lastteil abstützt.

Die Betätigung der beiden Hubmittel erfolgt bevorzugt dadurch, daß jedem Hubmittel ein verschwenkbares Element und ein Anschlag zugeordnet sind. Das Element und der Anschlag sind zueinander beweglich, insbesondere höhenverstellbar.

In einer vorteilhaften Ausführung sind die verschwenkbaren Elemente am Lastteil und die Anschläge am Antriebsteil angeordnet. Bei einer Bewegung des Lastteils gegenüber dem Antriebsteil findet somit automatisch eine Bewegung der verschwenkbaren Elemente gegenüber den Anschlägen statt. Jedes verschwenkbare Element stützt sich für die Betätigung des zugeordneten Hubmittels an dem jeweiligen Anschlag ab und wird durch die gegenseitige Bewegung verschwenkt.

Um eine gleichmäßige und gute Aufnahme der Last zu gewährleisten, ist das Lastteil mit mehreren Gabelarmen, bevorzugt drei Gabelarmen, versehen. Aus Gründen der Stabilität ist jeder dieser Gabelarme mit den beiden genannten Hubmittel versehen.

Es versteht sich von selbst, daß die Höhenverstellung des Lastteils durch die Zylinder und die Schwenkbewegung der Laufrollen der beiden Hubmittel aufeinander abgestimmt sind, so daß der gesamte Hubwagen in jeder Hubstufe im wesentlichen waagrecht steht.

Anhand der beigefügten schematischen Zeichnungen wird ein bevorzugtes Ausführungsbeispiel der Erfindung näher dargestellt. Dabei zeigt:
- Figur 1: eine Seitenansicht des erfindungsgemäßen Hubwagens;
- Figur 2: eine Draufsicht auf den erfindungsgemäßen Hubwagen;
- Figuren 3 und 4: die Wirkungsweise des ersten Hubmittels;
- Figuren 5 und 6: die Wirkungsweise des zweiten Hubmittels;
- Figur 7: eine schematische Ansicht der Hubeinrichtung;
- Figur 8: eine vergrößerte Einzelheit aus Figur 5.

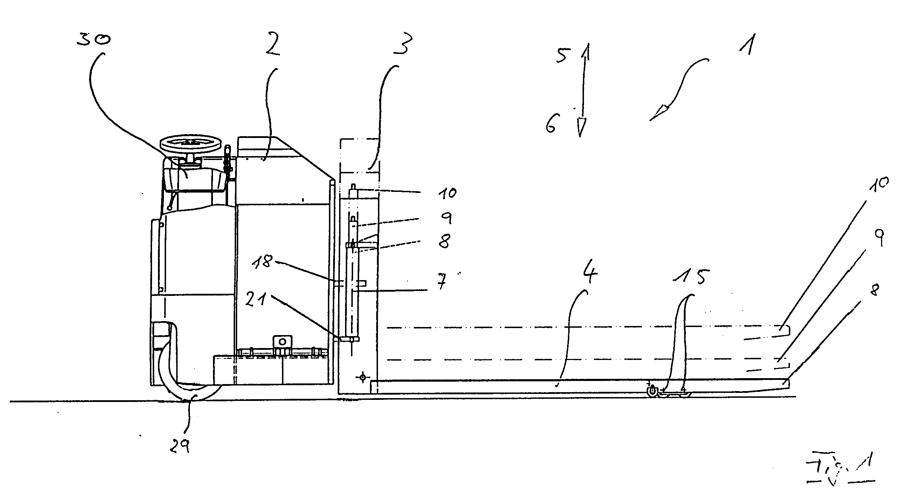

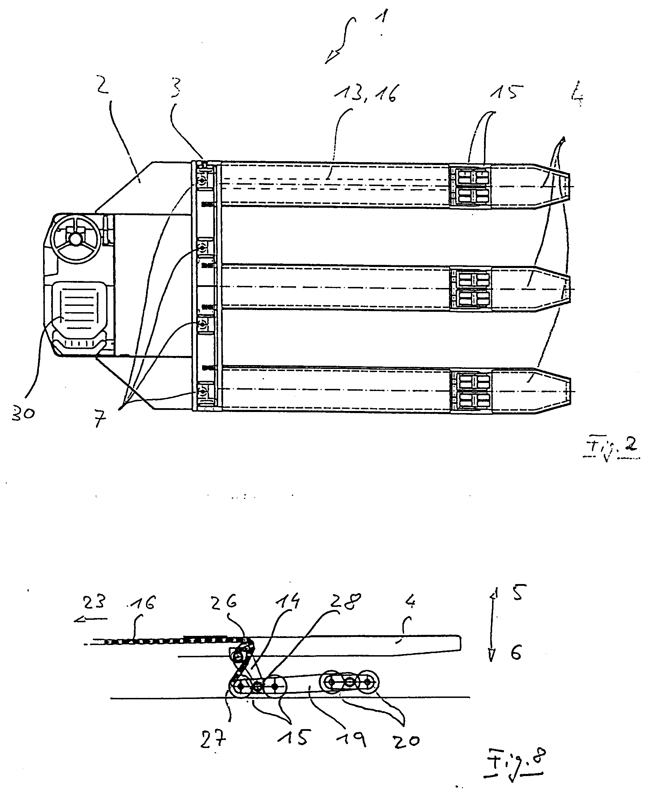

Gemäß den Figuren 1 und 2 weist der erfindungsgemäße Hubwagen 1 ein Antriebsteil 2 auf, an dem ein Lastteil 3 mit Gabelarmen 4 in Pfeilrichtungen 5, 6 beweglich gelagert ist. Die Verschiebung in Pfeilrichtungen 5, 6 erfolgt hierbei über mehrere Hubzylinder 7.

Das Antriebsteil 2 ist mit mindestens einem Antriebsrad 29 und einem Sitzplatz 30 mit einer Steuerung für den Hubwagen 1 versehen. Es trägt auch einen Energiespeicher, bevorzugt Akkumulatoren, und einen Motor.

Das Lastteil 3 kann vorzugsweise in drei Stellungen arretiert werden, nämlich in einer Grundstellung 8, einer ersten Hubstufe 9 und einer zweiten Hubstufe 10. In Figur 1 sind links jeweils schematisch die entsprechenden Positionen der Hubzylinder 7 sowie des Lastteils 3 dargestellt.

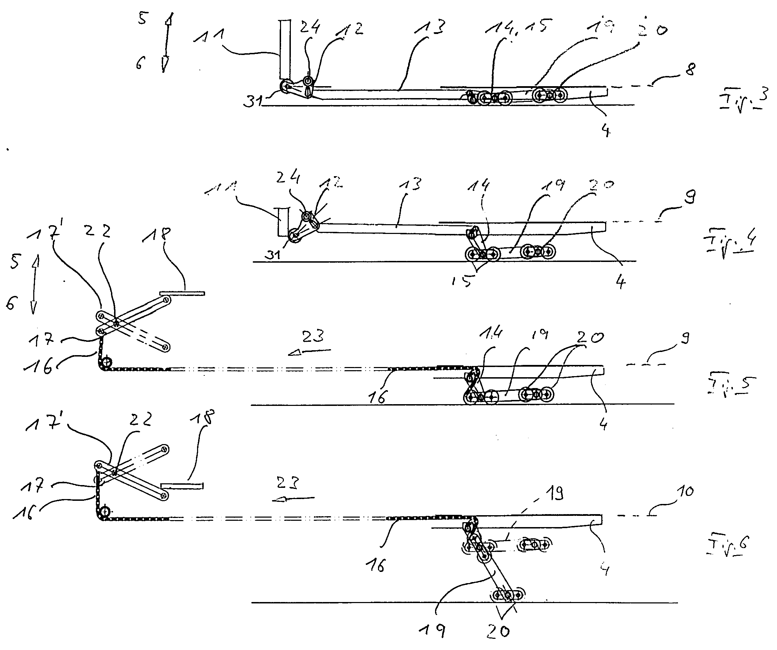

Figur 3 zeigt, daß das erste Hubmittel eine Führungsschiene 11 aufweist, die am Antriebsteil 2 festgelegt ist. Diese wirkt mit einem Schwenkhebel 12 zusammen, der an einem Drehpunkt 24 drehbar am Lastteil 3 angebracht ist. Am Schwenkhebel 12 ist eine Druckstange 13 angelenkt, die an ihrem anderen Ende auf einen Radarmhebel 14 wirkt, der drehbar an dem Gabelarm 4 angeordnet ist. Das freie Ende des Radarmhebels 14 trägt die Laufrollen 15.

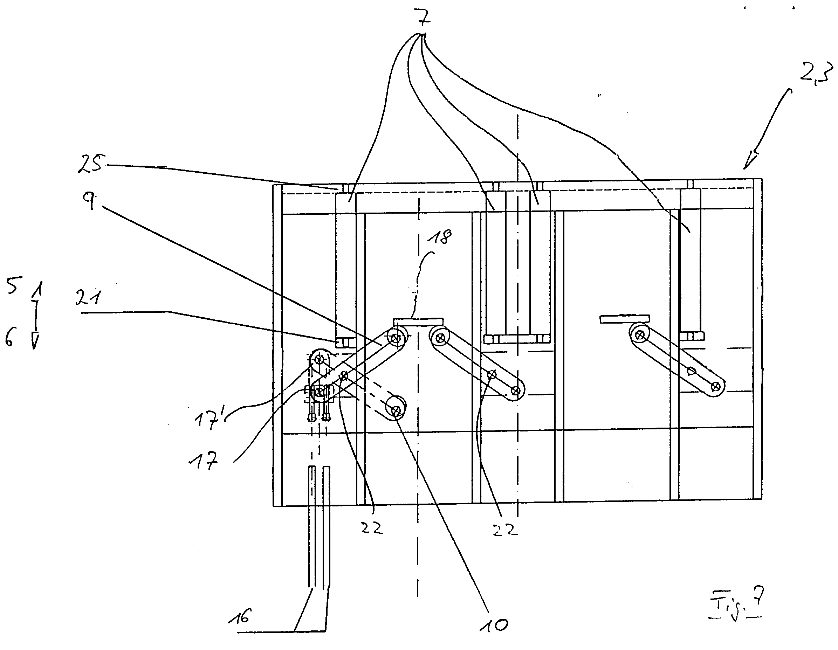

Gemäß Figur 4 wir bei einer Betätigung der Hubzylinder 7 der Drehpunkt 24 in Pfeilrichtung 5 angehoben, wobei eine am Schwenkhebel 12 angeordnete Rolle 31 an der Führungsstange 11 abrollt. Hierdurch wird der Schwenkhebel 12 verschwenkt, so daß die Druckstange 13 nach rechts bewegt wird. Der Radarmhebel 14 klappt hierdurch nach unten, so daß die Laufrollen 15 ausgeschwenkt werden und das Lastteil mit den Gabelarmen 4 in die erste Hubstufe 9 überführen.

Figur 5 und 6 zeigen, daß zum weiteren Anheben in die zweite Hubstufe 10 ein zweites Hubmittel mit einer Kette 16 vorgesehen ist. Diese ist mit ihrem einen Ende an einem schwenkbaren Hebel 17 befestigt, der sich an einem Gegenlager 18, das starr an dem Rahmen 2 angebracht ist, abstützt. Der Hebel 17 ist mit seinem Drehpunkt 22 wiederum an dem Lastteil 3 angebracht. Das gegenüberliegende Ende der Kette ist an einem Schwenkarm 19 befestigt, der mit Laufrollen 20 versehen und drehbar an dem Radarmhebel 14 angebracht ist.

Bei einer Bewegung des Lastteils 3 in Pfeilrichtung 5 über die Hubzylinder 7 wird auch dieser Drehpunkt 22 nach oben verschoben. Der Hebel 17 wird hierdurch in seine verschwenkt dargestellte Stellung 17' verbracht, bewegt dadurch die Kette 16 in Pfeilrichtung 23 und klappt den Schwenkhebel 19 nach unten. Das Lastteil 3 mit den Gabelarmen 4 wird hierdurch in die zweite Hubstufe 10 angehoben und ruht dann auf den verschwenkten Laufrollen 20, wie dies in Figur 6 gezeigt ist.

Es wird an dieser Stelle ausdrücklich darauf hingewiesen, daß die Hebel 17, 17' und das Gegenlager 18 in den Figuren 5, 6 um 90 ° verdreht gezeichnet sind. Dies geschah der besseren Übersicht halber. In Wirklichkeit verlaufen die Hebel 17 nicht parallel zur Gabel 4, sondern senkrecht hierzu, also parallel zur Querachse des gesamten Hubwagens 1. Dieser Sachverhalt ist näher in Figur 7 dargestellt.

Aus Figur 7 geht hervor, daß vier Hubzylinder 7 verwendet werden, die jeweils an ihrem unteren Ende eine Befestigung 21 an dem Antriebsteil 2 und an ihrem oberen Ende eine Befestigung 25 an dem Lastteil 3 aufweisen. Die Hebel 17 können mit einer Rolle versehen sein, mit der sie sich an dem Gegenlager 18 anlegen. Hierdurch wird die Reibung verringert. Der Hebel 17' stellt hierbei die verschwenkte Position des Hebels 17 in der zweiten Hubstufe 10 dar. Es ist weiterhin erkennbar, daß selbstverständlich nicht nur eine Einfachkette 16, sondern auch eine Doppelkette verwendet werden kann.

Figur 7 zeigt die Betätigung der Kette 16, während Figur 8 die Auswirkung dieser Betätigung und die entsprechende Umsetzung in eine Bewegung des Schwenkhebels 19 zeigt. Die Kette 16 läuft über eine Rolle 26 und ist an dem Schwenkhebel 19 in einem Anlenkpunkt 27 befestigt. Dieser Anlenkpunkt liegt in der gezeigten Darstellung links von dem Drehpunkt 28 zwischen dem Schwenkhebel 19 und dem Radarmhebel 14. Sobald nun die Kette 16 in Pfeilrichtung 23 gezogen wird, wirkt sie über die Rolle 26 eine entsprechende Zugkraft auf dem Anlenkpunkt 27 aus. Der Radarmhebel 14 ist hierbei durch die Druckstange 13 arretiert und kann nicht nachgeben. Der Schwenkhebel 19 wird also nach unten verschwenkt, die Laufrollen 20 legen sich auf dem Boden an. Bei einer weiteren Bewegung der Kette 16 in Pfeilrichtung 23 heben die Laufrollen 15 vom Boden ab. Die Gabel 4 ruht auf den Laufrollen 20. Der Schwenkhebel 19 wird nun solange weiter verschwenkt, bis die Hubzylinder 7 ihren vorgegebenen Maximalhub erreicht haben. In dieser Stellung liegt er bevorzugt, wie in Figur 6 dargestellt, etwa in Verlängerung zu dem Radarmhebel 14. Die Gabel 4 befindet sich dann in der zweiten Hubstufe 10, so daß eine Übergabe von Lasten ohne Schwierigkeiten möglich ist. Zum Absenken wird über die Hubzylinder 7 das Lastteil 3 in Fahrtrichtung 6 nach unten verfahren, wobei der Hebel 19 wieder einklappt. Bei einem weiteren Zurückstellen der Hubzylinder 7 wird auch der Radarmhebel 14 wieder durch die Druckstange 13 freigegeben und kann in seine in Figur 3 gezeigte Stellung zurückschwenken.

Mit den hintereinander eingesetzten Hubmitteln für die beiden Hubstufen wird über den gesamten Hub eine waagerechte Ausrichtung der Gabelarme 4 des Lastteils 3 möglich. Die im Luftfrachtbereich geforderte Systemhöhe von 508 mm wird dabei in der zweiten Hubstufe 10 erreicht. Weiterhin zeichnet sich er Hubwagen 1 durch eine hohe Wendigkeit auch bei engen Platzverhältnissen aus.

## Patentansprüche

1. Hubwagen, insbesondere für die Verwendung im Luftfrachtbereich, mit einem Antriebsteil, das mindestens ein Antriebsrad aufweist, und einem an dem Antriebsteil geführten Lastteil, das mindestens eine Laufrolle (15, 20) aufweist und mittels einer Hubeinrichtung bezüglich des Antriebsteils höhenverstellbar ist, dadurch gekennzeichnet, daß zur Höhenverstellung des Lastteils (3) zwei nacheinander betätigbare Hubmittel (11-14; 16-19) für jeweils eine Hubstufe (9, 10) vorgesehen sind.

2. Hubwagen nach Anspruch 1, dadurch gekennzeichnet, daß das erste Hubmittel eine Druckstange (13) aufweist, die mit einem Radarmhebel (14) zusammenwirkt, über den mindestens eine erste Laufrolle (15) bezüglich des Lastteils (3) schwenkbar ist.

3. Hubwagen nach Anspruch 1 oder 2, dadurch gekennzeichnet, daß das zweite Hubmittel ein Zugmittel (16), insbesondere eine Doppelkette, aufweist, mit dem mindestens eine zweite Laufrolle (20), die am freien, ersten Ende eines Schwenkhebels (19) angeordnet ist, bezüglich der mindestens einen ersten Laufrolle (15) schwenkbar ist.

4. Hubwagen nach Anspruch 3, dadurch gekennzeichnet, daß der Schwenkhebel (19) an einem Radarmhebel (14) des ersten Hubmittels (11-14) schwenkbar gelagert ist.

5. Hubwagen nach Anspruch 3 oder 4, dadurch gekennzeichnet, daß das Zugmittel (16) auf das zweite Ende des Schwenkhebels (19) wirkt, das näher am Drehpunkt (28) des Hebels (19) liegt.

6. Hubwagen nach einem der Ansprüche 1 bis 5, dadurch gekennzeichent, daß die Hubeinrichtung mindestens einen Hubzylinder (7) aufweist, der einerseits am Antriebsteil (2) und andererseits am Lastteil (3) angreift.

7. Hubwagen nach einem der Ansprüche 1 bis 6, dadurch gekennzeichnet, daß für die Betätigung der beiden Hubmittel (11-14; 16-19) je ein verschwenkbares Element (12; 17) und je ein Anschlag (11; 18) vorgesehen sind, die relativ zueinander beweglich sind.

8. Hubwagen nach Anspruch 7, dadurch gekennzeichnet, daß die verschwenkbaren Elemente (12; 17) am Lastteil (3) und die Anschläge (11; 18) am Antriebsteil (2) angeordnet sind.

9. Hubwagen nach einem der Ansprüche 1 bis 8, dadurch gekennzeichnet, daß das Lastteil (3) mit Gabelarmen (4) versehen ist.

10. Hubwagen nach Anspruch 9, dadurch gekennzeichnet, daß jeder der Arme der Gabelarme (4) mit den beiden Hubmitteln (11-14; 16-19) versehen ist.
